# DEMANDE DE BREVET EUROPEEN

(11) **EP 3 059 147 A1**
(43) Date de publication de la demande: **24.08.2016**
(21) Numéro de dépôt: 16155303.7
(22) Date de dépôt: 11.02.2016
(51) Int. Cl.: B62D 49/08, A01B 59/06, A01B 59/043

(54) **DISPOSITIF DE LESTAGE**

(30) Priorité: 17.02.2015 FR 1551322
(71) Demandeur: Lestagri, 82500 Beaumont-de-Lomagne (FR)
(72) Inventeur: NOGUES, Gilbert, 82500 BEAUMONT-DE-LOMAGNE (FR)
(74) Mandataire: Ipside

(57) **Abrégé**

Le dispositif de lestage (10) pour tracteur comporte une masse mère (11) s'étendant en hauteur selon un axe vertical z et en longueur selon un axe longitudinal x, ladite masse mère comprenant deux moyens de fixation inférieurs latéraux (20), et un moyen de fixation supérieur médian (21), lesdits deux moyens de fixation inférieurs latéraux et ledit moyen de fixation supérieur médian étant destinés à coopérer avec un moyen d'attelage d'un tracteur, caractérisé en ce que les moyens de fixation inférieurs latéraux comprennent des premiers moyens d'ajustement (30) aptes à ajuster l'écartement entre les moyens de fixation inférieurs latéraux, et en ce que le moyen de fixation supérieur médian comprend des deuxièmes moyens d'ajustement (31) aptes à ajuster l'écartement entre le moyen de fixation supérieur médian et les moyens de fixation inférieurs latéraux.

## Description

### Domaine technique.

La présente invention appartient au domaine des équipements pour tracteurs et concerne notamment un dispositif de lestage.

### État de la technique antérieure.

L'attelage d'un équipement à l'arrière d'un tracteur est typiquement réalisé par le biais de barres d'attelage du tracteur. Généralement, un tracteur possède trois barres d'attelage, parmi lesquelles deux sont disposées en partie inférieure du tracteur, chacune respectivement à proximité d'une des deux roues arrières, et une, disposée en partie supérieure, à égale distance des deux barres d'attelage inférieures. Chaque barre est articulée à ses extrémités, d'une part au tracteur, et d'autre part, à l'équipement, de façon à relier l'équipement au tracteur. Ce type d'attelage est communément appelé « attelage trois points ». Dans la suite de la description de l'invention, on entend par « point d'attelage », une liaison articulée entre une barre et l'équipement.

Les exigences relatives à ce type d'attelage de tracteur sont définies par la norme internationale ISO/DIS 730. Cette norme spécifie notamment les dimensions et les exigences requises des attelages trois points permettant d'attacher des équipements à l'arrière des tracteurs. Un autre aspect de cette norme est de répertorier les tracteurs, selon différentes catégories, suivant leurs plages de puissances. Par exemple, un tracteur dit de catégorie 1 possède une puissance inférieure à 48 kW, un tracteur dit de catégorie 2 possède une puissance comprise entre 30 à 92kW, etc.. Un des objectifs de la norme est de spécifier les dimensions des barres d'attelage, en spécifiant par exemple la valeur de l'écartement entre les deux barres d'attelage inférieures et la valeur de l'écartement entre la barre supérieure et les deux barres d'attelage inférieures, suivant chaque catégorie de tracteur.

Il est évident que les dimensions des barres d'attelage de tracteurs de faible puissance, tels que les tracteurs de catégorie 1 ou 2, sont plus faibles que les dimensions des barres d'attelage de tracteurs de puissance plus importante, tels que les tracteurs de catégorie 3 ou 4. Il va ainsi de soi que les équipements doivent être dimensionnés en fonction de la catégorie du tracteur sur lequel ils sont destinés à être attelés. Il existe, par conséquent, des équipements spécifiques pour chaque catégorie de tracteur.

De ce fait, un exploitant agricole possédant des tracteurs de catégories différentes en vue d'exploiter des parcelles agricoles de tailles différentes, est contraint de posséder des équipements spécifiques pour chacune des catégories de tracteurs. De tels équipements nécessitent un investissement non négligeable, que ce soit en termes de coût financier à l'achat, de maintenance ou encore de zones de stockage. Il s'avère donc relativement onéreux pour un exploitant de posséder plusieurs tracteurs de catégories différentes et plusieurs équipements.

Parmi les équipements existants pour tracteurs, on peut citer les dispositifs de lestage. Ces dispositifs de lestage sont connus pour augmenter le poids du tracteur afin d'accroitre son adhérence au sol lors d'opérations requérant des forces de traction élevées.

Des dispositifs de lestage connus consistent en des masses destinées à être accrochées aux jantes des roues du tracteur. De telles masses résolvent en partie les problèmes de compatibilité des catégories de tracteur. Cependant, les opérations de montage s'avèrent complexe à mettre en oeuvre du fait que les masses sont difficiles à manipuler et à installer sur les jantes. Par ailleurs, ces masses génèrent un balourd qui peut accélérer la dégradation des pneumatiques du tracteur.
D'autres dispositifs de lestage connus sont destinés à être fixés aux barres d'attelages, à l'arrière du tracteur. Avantageusement, de tels dispositifs de lestage comprennent des moyens d'attelage destinés à coopérer avec un outil. Par outil, on entend tout équipement destiné à être tracté ou levé en vue d'accomplir un travail lié à l'exploitation agricole, tel qu'une charrue portée ou semi-portée, une remorque etc.. Les outils requièrent généralement des forces de traction élevées, et par voie de conséquence, une adhérence du tracteur au sol importante. De tels dispositifs de lestage présentent un encombrement et un positionnement à l'arrière du tracteur tels qu'ils obstruent la vue de l'exploitant, lorsqu'il est au poste de conduite du tracteur, sur les outils attelés au tracteur. Par ailleurs, ces dispositifs de lestage sont généralement formés à partir d'une pièce de fonderie moulée, en fonte. Les inconvénients de cette disposition résident dans le prix élevé de la réalisation des moules de fonderie, et la mauvaise résistance aux chocs de la fonte. De plus, des moyens de fixation au tracteur et des moyens d'accroche de l'outil sont généralement assemblés à la pièce de fonderie par vissage. En plus d'augmenter la fragilité de la masse, ce mode d'assemblage offre une résistance particulièrement faible aux efforts de traction.

### Exposé de l'invention

La présente invention vise à remédier à tout ou partie des inconvénients ci-dessus mentionnés, en proposant un dispositif de lestage pour tracteur destiné à être attelé à l'arrière d'un tracteur de façon simple et rapide. Un des objectifs de l'invention est qu'un même dispositif de lestage puisse être attelé à des tracteurs de catégories différentes et/ou qu'un même dispositif de lestage puisse coopérer avec des outils destinés à être attelés à des tracteurs de catégories différentes.

En particulier, l'invention propose un dispositif de lestage pour tracteur comportant une masse mère s'étendant en hauteur selon un axe vertical et en longueur selon un axe longitudinal, ladite masse mère comprenant deux moyens de fixation inférieurs latéraux et un moyen de fixation supérieur médian, appelés respectivement « moyens de fixation inférieurs » et « moyen de fixation supérieur » dans la suite du texte, lesdits deux moyens de fixation inférieurs et ledit moyen de fixation supérieur étant destinés à coopérer avec un moyen d'attelage d'un tracteur. Les moyens de fixation inférieurs comprennent des premiers moyens d'ajustement, aptes à ajuster l'écartement entre les moyens de fixation inférieurs, et le moyen de fixation supérieur comprend des deuxièmes moyens d'ajustement, aptes à ajuster l'écartement entre le moyen de fixation supérieur et les moyens de fixation inférieurs.

Plus particulièrement, les deux moyens de fixation inférieurs sont écartés l'un de l'autre selon l'axe longitudinal, et le moyen de fixation supérieur et les moyens de fixation inférieurs sont écartés selon l'axe vertical et l'axe longitudinal. Par ailleurs, les axes vertical et longitudinal sont orthogonaux.

De par ces caractéristiques, notamment les premier et deuxième moyens d'ajustement, les moyens de fixation inférieurs et le moyen de fixation supérieur sont aptes à coopérer avec des moyens d'attelage de tracteur de dimensions différentes, et donc avec des moyens d'attelage de tracteurs de catégories différentes telles que définies par la norme ISO/DIS 730. Ainsi, un seul dispositif de lestage peut être employé pour plusieurs catégories de tracteur.

Suivant des modes de réalisation préférés, l'invention répond en outre aux caractéristiques suivantes, mises en oeuvre séparément ou en chacune de leurs combinaisons techniquement opérantes.

Selon des caractéristiques particulières de l'invention, les premiers moyens d'ajustement comprennent une pluralité de chapes attenantes les unes aux autres, réparties selon l'axe longitudinal, chaque chapes étant pourvue d'une paire de perçages traversants, chaque paire de perçages traversants étant apte à recevoir une broche.

Dans des exemples préférés de réalisation, chaque chape comprend deux flancs, en vis-à-vis l'un de l'autre, un unique flanc étant interposé entre deux chapes attenantes. Une paire de perçages traversants est formée par deux perçages en vis-à-vis l'un de l'autre, pratiqués sur les flancs de chaque chape.

Selon d'autres caractéristiques particulières de l'invention, les deuxièmes moyens d'ajustement comprennent une chape dotée d'une pluralité de paires de perçages traversants, répartis selon l'axe vertical, chaque paire de perçages traversants étant apte à recevoir une broche.

Dans des exemples préférés de réalisation, la chape comprend deux flancs, en vis-à-vis l'un de l'autre. Les paires de perçages traversants sont formés par deux orifices en vis-à-vis, pratiqués sur les flancs de la chape.

Selon des caractéristiques additionnelles de l'invention, la masse mère comporte trois organes d'accroche destinés à coopérer avec des moyens d'attelage d'un outil, lesdits organes d'accroche étant disposés de telle sorte que le dispositif de lestage est apte à constituer une interface tracteur/outils.

Selon d'autres caractéristiques de l'invention, parmi les trois organes d'accroche, un premier et un deuxième organe d'accroche sont solidaires des premiers moyens d'ajustement.

Selon d'autres caractéristiques de l'invention, parmi les trois organes d'accroche, un troisième organe d'accroche comprend un troisième moyen d'ajustement, apte à ajuster l'écartement entre le troisième organe d'accroche et les autres organes d'accroche.

On comprend que l'expression « les autres organes d'accroche » fait référence aux premier et deuxième organes d'accroche.

Ainsi, le dispositif de lestage est apte à coopérer avec des outils de tailles diverses, et de ce fait, grâce à cette caractéristique, le dispositif de lestage permet l'attelage d'outils spécifiques à une catégorie de tracteur donnée sur un tracteur d'une catégorie différente.

Selon des caractéristiques particulières de l'invention, la masse mère comporte un évidement traversant selon un axe transversal, orthogonal aux axes vertical et longitudinal.

A travers cet évidement sont libres de passer des éléments de liaison entre le tracteur et l'outil, indispensables au fonctionnement de l'outil, tels qu'un arbre de transmission de puissance du tracteur ou un timon d'attelage. De ce fait, la hauteur d'attelage du dispositif de lestage, c'est-à-dire, la distance entre le sol et le dispositif de lestage peut être suffisamment diminuée pour permettre la visibilité de l'exploitant sur l'outil attelé au tracteur.

Selon d'autres caractéristiques de l'invention, la masse mère comporte des organes d'assemblage aptes à recevoir des organes d'assemblage complémentaires de masses additionnelles.

Cette caractéristique permet d'ajuster la masse du dispositif de lestage, pour une opération ponctuelle, en fonction des besoins de l'exploitant. Par exemple, il peut être utile d'ajuster la masse du dispositif de lestage en fonction des outils attelés au tracteur ou en fonction de l'état du sol sur lequel le tracteur est amené à pratiquer des travaux.

Selon d'autres caractéristiques de l'invention, la masse mère est fabriquée à partir de tôles d'acier soudées entre elles. Cette particularité permet au dispositif de lestage de présenter une résistance importante aux contraintes tout en étant relativement compact étant donné la densité du matériau qui le constitue.

### Bref exposé des figures et des dessins.

D'autres avantages, buts et caractéristiques de la présente invention apparaîtront à la lecture de la description d'au moins une forme préférée de réalisation, donnée à titre d'exemple non limitatif en se référant aux dessins annexés en lesquels :
- la figure 1 est une vue en perspective d'un dispositif de lestage selon une première forme de réalisation,
- la figure 2 est une autre vue en perspective du dispositif de lestage de la figure 1,
- la figure 3 est une vue en perspective du dispositif de lestage selon une seconde forme de réalisation, comportant un troisième organe d'accroche en position de libération d'outil,
- la figure 4 est une autre vue en perspective du dispositif de lestage de la figure 3,
- la figure 5 est une vue en perspective du dispositif de lestage de la figure 3, le troisième organe d'accroche étant en position de verrouillage d'outil.

### Description d'un mode de réalisation de l'invention

Un dispositif de lestage 10 objet de la présente invention est destiné à être attelé à l'arrière d'un tracteur, par exemple de type agricole ou forestier, et est apte à constituer une interface tracteur/outil.

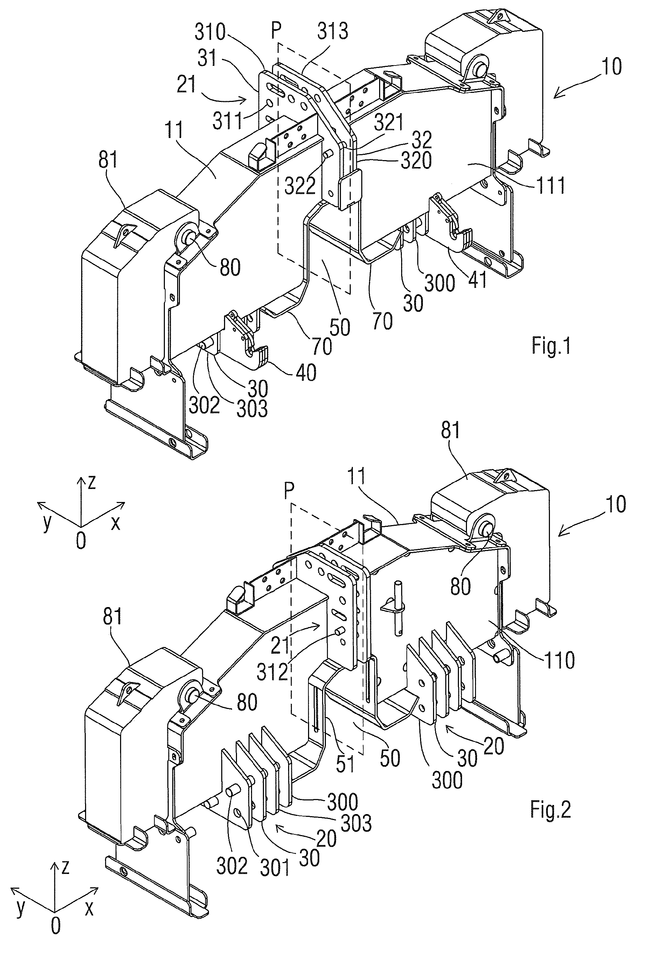

Comme illustré en figures 1 à 5, le dispositif de lestage 10 comporte une masse mère 11 s'étendant en hauteur selon un axe vertical z, entre une face inférieure et une face supérieure, et en longueur selon un axe longitudinal x, entre deux extrémités longitudinales, les axes vertical z et longitudinal x étant orthogonaux. L'épaisseur de la masse mère 11 s'étend selon un axe transversal y, orthogonal à chacun des axes vertical z et longitudinal x. De ce fait, la masse mère 11 est sensiblement de forme géométrique parallélépipédique rectangle.

Les axes x, y et z forment un repère orthonormé, d'origine 0.

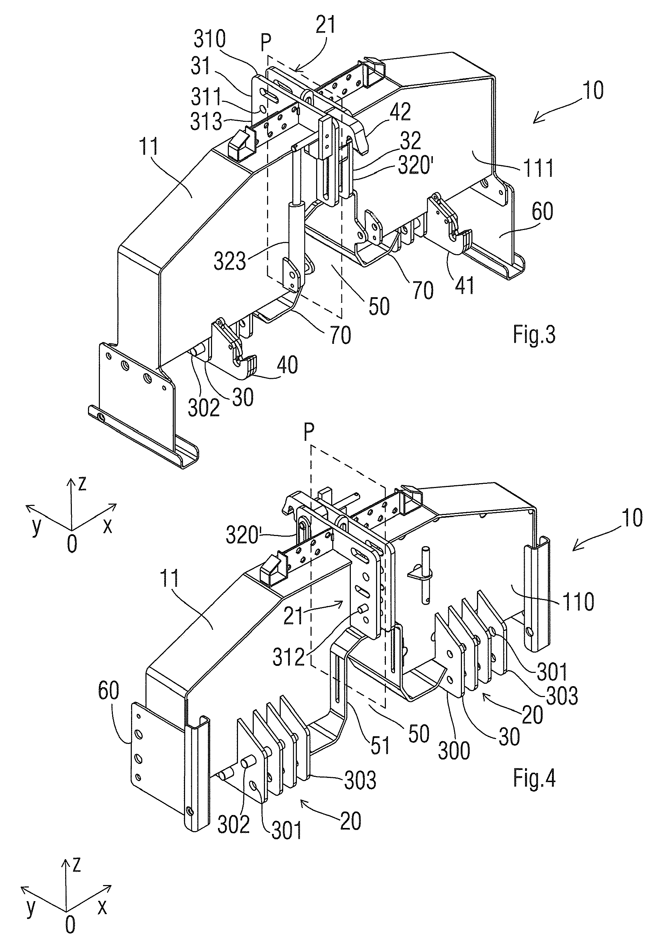

Comme représenté en figures 2 et 4, la masse mère 11 comporte une face interne 110, destinée à être disposée au regard du tracteur lorsque le dispositif de lestage 10 est attelé. La face interne est parallèle à un plan x0y. En vue de l'attelage du dispositif de lestage 10, la masse mère 11 comprend deux moyens de fixation inférieurs 20 et un moyen de fixation supérieur 21. Lesdits deux moyens de fixation inférieurs 20 et ledit moyen de fixation supérieur 21 sont destinés à coopérer avec un moyen d'attelage d'un tracteur non représenté sur les figures. Préférentiellement, le moyen d'attelage est formé par un attelage dit « attelage trois points », connu en soi, constitué de deux barres d'attelage inférieures et d'une barre d'attelage supérieure. Les moyens de fixation inférieurs 20 sont disposés de part et d'autre, et préférentiellement à égale distance, d'un plan transversal de symétrie P de la masse mère 11. Le moyen de fixation supérieur 21 est contenu dans ledit plan transversal de symétrie.

Les moyens de fixation inférieurs 20 comprennent des premiers moyens d'ajustement 30 aptes à ajuster l'écartement entre les deux moyens de fixation inférieurs 20. Préférentiellement, les premiers moyens d'ajustement 30 comprennent une pluralité de chapes 300 attenantes les unes aux autres, réparties selon l'axe longitudinal x. Dans une forme préférée de réalisation, illustrée en figures 2 et 4, chaque premier moyen d'ajustement 30 comprend trois chapes 300. Chaque chape 300 est pourvue d'une ou plusieurs paires de perçages traversants 301 apte à recevoir une broche 302. Chaque chape comprend par exemple deux flancs 303, parallèles, dans des plans Y0Z, en vis-à-vis l'un de l'autre. De préférence, un unique flanc 303 est interposé entre deux chapes 300 attenantes. Chaque paire de perçages traversants 301 est formée par deux orifices pratiqués sur les flancs 303 d'une chape 300, en vis-à-vis l'un de l'autre.

Selon une forme préférée de réalisation, illustrée figures 2 et 4, chaque chape 300 comprend deux paires de perçage 301, réparties selon l'axe vertical z. Cette caractéristique permet d'atteler le dispositif de lestage 10 selon deux niveaux de hauteur différents. De cette manière, il est possible d'adapter la hauteur de garde au sol du dispositif de lestage, c'est-à-dire la distance entre le sol et la face inférieure de la masse mère 11, en fonction de l'état de l'environnement dans lequel le tracteur est amené à évoluer.

Le moyen de fixation supérieur 21 comprend des deuxièmes moyens d'ajustement 31 aptes à ajuster l'écartement entre le moyen de fixation supérieur 21 et les moyens de fixation inférieurs 20. Préférentiellement, les deuxièmes moyens d'ajustement 31 comprennent une chape 310 dotée d'une pluralité de paires de perçages traversants 311, répartis selon l'axe vertical z, chaque paire de perçages traversants 311 étant apte à recevoir une broche 312. La chape 310 comprend deux flancs 313, parallèles, dans des plans y0z, en vis-à-vis l'un de l'autre. Les paires de perçages traversants 311 sont formées par deux orifices pratiqués sur les flancs 313 de la chape 310, en vis-à-vis.

Comme représenté en figures 1 et 3, la masse mère 11 comporte une face externe 111, opposée à la face interne 110, destinée à être disposée au regard d'un outil lorsque le dispositif de lestage 10 est attelé à un tracteur, de sorte que le dispositif de lestage 10 soit apte à constituer une interface tracteur/outils. En vue de l'attelage de l'outil au dispositif de lestage 10, la masse mère 11 comporte trois organes d'accroche 40, 41, 42 destinés à coopérer avec des moyens d'attelage de l'outil non représentés sur les figures.

Parmi les trois organes d'accroche, un premier et un deuxième organe d'accroche, respectivement 40 et 41, sont solidaires de chaque premier moyen d'ajustement 30 de sorte que l'écartement entre les premier et deuxième organes d'accroche 40 et 41 puisse être ajusté. Ainsi, dans une forme préférée de réalisation, les premier et deuxième organes d'accroche 40 et 41 sont chacun solidarisés à une chape 300. Pour ce faire, les premier et deuxième organes d'accroche 40 et 41 comprennent deux paires de perçages traversants, de diamètre sensiblement identique au diamètre des perçages traversants 301 des flancs 303 des chapes 300, de sorte que ces perçages puissent recevoir une broche 302. Par ailleurs, selon une forme préférée de réalisation, ces premier et deuxième organes d'accroche 40 et 41 sont formés par des crochets, dont la concavité est orientée selon la direction de l'axe vertical z.

Un troisième organe d'accroche 42 comprend, selon une forme de réalisation, un arbre de liaison, non représenté sur les figures, dont les extrémités sont respectivement aptes à coopérer avec une chape 320 de la face externe et un moyen d'attelage de l'outil. Le troisième organe d'accroche 42 comprend un troisième moyen d'ajustement 32 apte à ajuster l'écartement entre le troisième organe d'accroche 42 et les autres organes d'accroche 40 et 41. Le troisième moyen d'ajustement 32 est, dans des formes de réalisations de l'invention, formé par la chape 320, fixée sur la face externe 111 de la masse mère 11. La chape 320 comprend deux flancs parallèles, en vis-à-vis, pourvues de paires de perçages traversants 321 aptes recevoir une broche 322, lesdits perçages 321 et broche 322 étant aptes à coopérer avec une des extrémités de l'arbre de liaison. Avantageusement, l'outil peut recevoir une chape comprenant deux flancs parallèles, en vis-à-vis, pourvues des paires de perçages traversants aptes à recevoir une broche, lesdits perçages et broche étant aptes à coopérer avec l'autre extrémité de l'arbre de liaison.

Dans d'autres variantes de réalisation de l'invention non représentées sur les figures, l'arbre comprend un manchon dont la rotation permet l'ajustement de la longueur dudit arbre. Un arbre de ce type est connu de l'état de la technique, et comprend par exemple deux portions contigües respectivement dotées d'un filetage dont le filet est orienté à gauche et à droite. Le manchon est disposé en regard des filetages et est pourvu d'un filetage complémentaire à chacun desdits filetages, de sorte que le manchon se trouve en relation de liaison hélicoïdale avec l'arbre. Ainsi, la longueur de l'arbre est ajustable par rotation du manchon, ladite longueur augmentant ou diminuant selon le sens de rotation du manchon par rapport à l'arbre.

Dans d'autres variantes de réalisation de l'invention, le troisième moyen d'ajustement 32 peut être formé par une combinaison de tout moyen technique connu en soi, tels que les moyens techniques cités précédemment.

Préférentiellement, les chapes 310 et 320 sont réalisées en une seule et même pièce.

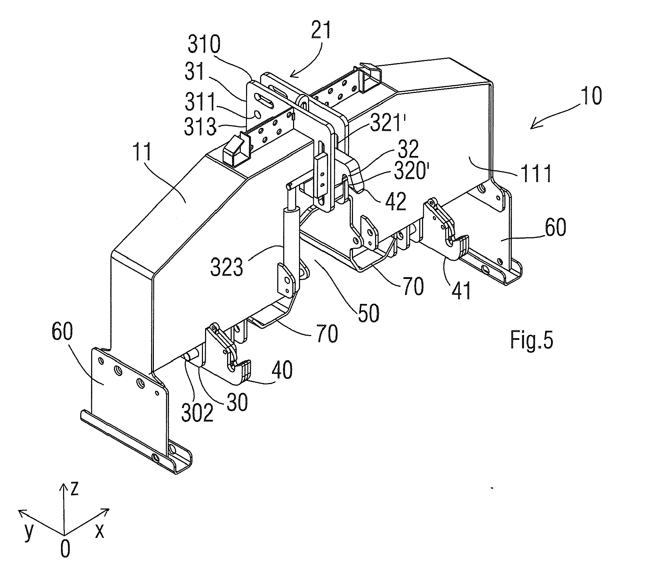

Dans d'autres formes de réalisation de l'invention, comme illustré en figures 3, 4 et 5, le troisième organe d'accroche 42 est, par exemple, formé par un crochet dont la concavité est orientée selon l'axe vertical z. La concavité des crochets des premier et deuxième organes d'accroche 40 et 41 est opposée à la concavité du crochet du troisième organe d'accroche 42. Le troisième moyen d'ajustement 32 peut être formé par une chape 320' comprenant deux flancs parallèles, sur chacun desquels est pratiquée une lumière 321', de préférence de forme oblongue, s'étendant suivant l'axe vertical z, les lumières étant en vis-à-vis l'une de l'autre. Ces lumières 321' sont destinées à recevoir un coulisseau rigidement fixé au crochet, ledit coulisseau étant apte à coulisser dans lesdites lumières 321' en vue d'entrainer le crochet entre une position de verrouillage d'outil, pour permettre le blocage de l'outil dans le dispositif de lestage, comme représenté en figure 5, et une position de libération d'outil, pour permettre l'insertion ou le retrait de l'outil du dispositif de lestage, comme représenté en figure 3. Cet entraînement est préférentiellement réalisé par un vérin 323, par exemple de type hydraulique, disposé selon l'axe vertical z, et dont une extrémité est fixée à la masse mère 11, et dont l'autre extrémité est fixée au troisième organe d'accroche 42, tel que représenté en figures 3 et 5. Avantageusement, le vérin hydraulique peut être piloté depuis le poste de conduite du tracteur. L'entraînement du troisième organe d'accroche 42 peut être cependant réalisé par tout moyen d'entraînement connu en soi.

De par ces caractéristiques, le troisième moyen d'ajustement 32 est apte à ajuster l'écartement entre le troisième organe d'accroche 42 et les premier et deuxième organes d'accroche 40 et 41. Ainsi, les organes d'accroches 40 et 41 sont aptes à coopérer avec des moyens d'attelage d'un outil de dimensions diverses. Préférentiellement, les chapes 310 et 320' sont réalisées en une seule et même pièce.

Dans une forme préférée de réalisation, la masse mère 11 comporte un évidement 50 traversant selon un axe transversal y. Le plan transversal de symétrie P de la masse mère 11 est confondu avec un plan de symétrie de l'évidement 50 afin que la répartition de la masse de la masse mère 11 soit équilibrée. Cet évidement 50 comporte avantageusement une lèvre 51 sur une périphérie d'une de ses extrémités, s'étendant selon l'axe transversal y. Cette lèvre 51 présente deux flancs parallèles, en vis-à-vis l'un de l'autre, se développant selon l'axe vertical z et comprenant chacun une lumière, de préférence de forme oblongue, s'étendant également selon l'axe vertical z.

De par ces caractéristiques, l'évidement 50 est apte à recevoir, en fixation entre les deux flancs, par exemple, un palier de cardan, dont la distance par rapport au sol est ajustable par tout moyen d'assemblage connu, tel qu'un système vis-écrou, en association avec les lumières des lèvres 51.

A travers cet évidement 50 sont libres de passer des éléments de liaison entre le tracteur et l'outil, indispensables au fonctionnement de certains outils spécifiques, tels qu'un arbre de transmission de puissance du tracteur ou un timon d'attelage. De ce fait, la hauteur d'attelage du dispositif de lestage 10, c'est-à-dire, la distance entre le sol et la face inférieure de la masse mère 11 du dispositif de lestage 10 peut être suffisamment diminuée pour permettre la visibilité de l'exploitant sur l'outil attelé au tracteur.

Grâce à ces caractéristiques, le dispositif de lestage 10 permet d'atteler des outils suivant plusieurs types d'attelage. En effet, les trois organes d'accroche 40, 41, 42 du dispositif de lestage 10 permettent d'atteler des outils portés, tels que des charrues ou des herses. L'évidement 50 de la masse mère 11 permet d'atteler, à des moyens d'attelage propres au tracteur, tels qu'un piton ou une chape d'attelage, des outils semi-portés, tels que des remorques à un essieu, ou des outils trainés, tels que des remorques à plusieurs essieux, via un timon d'attelage portant un anneau à son extrémité libre.

Avantageusement, la masse mère 11 est pourvue de béquilles 60, telles que représentées en figures 1 à 5, aptes à occuper une première position, dite position de maintien, comme illustré en figures 1 à 3 et 5, lorsque le dispositif de lestage 10 n'est pas attelé à un tracteur, et une seconde position, dite position effacée, comme illustré en figure 4, lorsque le dispositif de lestage 10 est attelé à un tracteur. La position de maintien, est destinée à maintenir la masse mère 11 à distance du sol afin de faciliter son stockage et sa préhension. Ces béquilles 60 sont disposées à chaque extrémité longitudinale de la masse mère 11, à proximité de la face inférieure. Les béquilles 60 sont fixées de manière articulées à la masse mère 11 par des moyens connus en soi, tels que des éléments d'assemblage de type vis/écrou associés à des perçages, de sorte que chaque béquille 60 puisse pivoter d'une position à l'autre, comme on le comprend à la lecture des figures 3 et 4.

Le changement de position des béquilles 60 est réalisé lorsque le dispositif de lestage 10 est attelé au tracteur.

Dans une forme préférée de réalisation, le dispositif de lestage 10 comprend des logements de préhension 70 aptes et destinés à coopérer avec un dispositif de manutention, par exemple, des fourches de chariot élévateur, pour faciliter manutention et exclure tout risque d'écrasement. Préférentiellement, ces logements de préhension 70 sont attenants à la face inférieure de la masse mère 11.

Comme représenté en figures 1 et 2, la masse mère 11 comporte des organes d'assemblage 80 aptes à recevoir des organes d'assemblage complémentaires de masses additionnelles 81. Préférentiellement, les organes d'assemblage 80 sont rigidement fixés sur la face supérieure de la masse mère 11. Ces organes d'assemblage 80 présentent un profil complémentaire aux organes d'assemblage complémentaires des masses additionnelles 81, de sorte que lesdits organes puissent s'imbriquer l'un avec l'autre. Les masses additionnelles 81 sont fixées de manière amovible sur la masse mère 11 par tout moyen connu, tel que par liaison vis-écrou, une fois les organes d'assemblages des masses additionnelles et de la masse mère imbriqués l'un avec l'autre.

Selon une autre caractéristique, sur la face interne 110 est présent un support d'un moyen d'attelage du tracteur, par exemple un support de rotule d'attelage.

En vue d'assurer l'alimentation en énergie hydraulique ou pneumatique d'un l'outil attelé au tracteur, la masse mère 11 comprend, sur sa face supérieure, au moins une plaque support, dotée de perçages traversants. Ces perçages traversants sont destinés à recevoir des flexibles hydrauliques ou pneumatiques, en fonction du type d'énergie nécessaire au fonctionnement de l'outil attelé. Ces flexibles hydrauliques ou pneumatiques sont raccordés, par une de leurs extrémités, à des prises de puissance hydraulique ou pneumatique du moteur, et par leur autre extrémité, à une prise de l'outil.

La masse mère 11 est réalisée à partir d'un ensemble de plaques de tôles soudées les unes aux autres. Préférentiellement, ces tôles sont en acier. Ces dispositions ont pour avantages de simplifier la fabrication des dispositifs de lestage 10, dans la mesure où les opérations de soudures peuvent être automatisés, et de ce fait participent à réduire les couts liés à la production. Par ailleurs, de par ces dispositions, les dispositifs de lestages présentent une grande résistance aux chocs.

Il va de soi que la présente invention peut recevoir tous aménagements et variantes du domaine des équivalents techniques sans pour autant sortir du cadre du présent brevet tel que défini par les revendications ci-après.

## Revendications

1. Dispositif de lestage (10) pour tracteur comportant une masse mère (11) s'étendant en hauteur selon un axe vertical z et en longueur selon un axe longitudinal x, ladite masse mère comprenant deux moyens de fixation inférieurs latéraux (20), et un moyen de fixation supérieur médian (21), lesdits deux moyens de fixation inférieurs latéraux et ledit moyen de fixation supérieur médian étant destinés à coopérer avec un moyen d'attelage d'un tracteur, **caractérisé en ce que** les moyens de fixation inférieurs latéraux comprennent des premiers moyens d'ajustement (30) aptes à ajuster l'écartement entre les moyens de fixation inférieurs latéraux, et **en ce que** le moyen de fixation supérieur médian comprend des deuxièmes moyens d'ajustement (31) aptes à ajuster l'écartement entre le moyen de fixation supérieur médian et les moyens de fixation inférieurs latéraux.

2. Dispositif de lestage (10) selon la revendication précédente, dans lequel les premiers moyens d'ajustement (30) comprennent une pluralité de chapes (300) attenantes les unes aux autres, réparties selon l'axe longitudinal x, chaque chape étant pourvue d'une paire de perçages traversants (301), chaque paire de perçage étant apte à recevoir une broche (302).

3. Dispositif de lestage (10) selon l'une des revendications précédentes, dans lequel les deuxièmes moyens d'ajustement (31) comprennent une chape (310) dotée d'une pluralité de paires de perçages traversants (311), réparties selon l'axe vertical z, chaque paire de perçages traversants étant apte à recevoir une broche (312).

4. Dispositif de lestage (10) selon l'une des revendications précédentes, dans lequel la masse mère (11) comporte trois organes d'accroche destinés à coopérer avec des moyens d'attelage d'un outil, lesdits organes d'accroche étant disposés de telle sorte que le dispositif de lestage (10) est apte à constituer une interface tracteur/outils.

5. Dispositif de lestage (10) selon la revendication précédente, dans lequel, parmi les trois organes d'accroche, un premier et un deuxième organe d'accroche sont solidaires des premiers moyens d'ajustement (30).

6. Dispositif de lestage (10) selon l'une des revendications 4 ou 5, dans lequel parmi les trois organes d'accroche, un troisième organe d'accroche comprend un troisième moyen d'ajustement (32) apte à ajuster l'écartement entre le troisième organe d'accroche et les autres organes d'accroche.

7. Dispositif de lestage (10) selon l'une des revendications précédentes, dans lequel la masse mère (11) comporte un évidement (50) traversant selon un axe transversal y, orthogonal aux axes vertical z et longitudinal x.

8. Dispositif de lestage (10) selon l'une des revendications précédentes, dans lequel la masse mère (11) comporte des organes d'assemblage (80) aptes à recevoir des organes d'assemblage complémentaires de masses additionnelles (81).

9. Dispositif de lestage (10) selon l'une des revendications précédentes, dans laquelle la masse mère (11) comporte un ensemble de plaques de tôles soudées les unes aux autres.
